Europäisches Patentamt

European Patent Office

Office européen des brevets

(19)

(11) Veröffentlichungsnummer: **0 144 737
B1**

(12) # EUROPÄISCHE PATENTSCHRIFT

(45) Veröffentlichungstag der Patentschrift:
08.02.89

(51) Int. Cl.⁴: **B 60 K 41/22**

(21) Anmeldenummer: **84113209.5**

(22) Anmeldetag: **02.11.84**

(54) Steuersystem für eine Doppelkupplung eines lastschaltbaren Kraftfahrzeuggetriebes.

(30) Priorität: **03.12.83 DE 3343827**

(43) Veröffentlichungstag der Anmeldung:
**19.06.85 Patentblatt 85/25**

(45) Bekanntmachung des Hinweises auf die Patenterteilung:
**08.02.89 Patentblatt 89/6**

(84) Benannte Vertragsstaaten:
**DE FR GB IT NL SE**

(56) Entgegenhaltungen:
**DE-A- 1 775 135**
**DE-A- 3 309 869**

**VDI-BERICHTE, Nr. 466, 1983, Seiten 101-108,
Düsseldorf, DE; P. OP DE BEECK et al.: "Elektronische
Regelung eines Doppelkupplungs-Getriebes"**

(73) Patentinhaber: **Dr.Ing.h.c. F. Porsche
Aktiengesellschaft, Porschestrasse 42,
D-7000 Stuttgart 40 (DE)**

(72) Erfinder: **Leibold, Kurt-André, Münchinger Strasse 16,
D-7251 Hemmingen (DE)**
Erfinder: **Bardoll, Meinrad, Dipl.-Ing. FH, Im
Pfaffengrund 4, D-7560 Gaggenau 19 (DE)**

ACTORUM AG

**Beschreibung**

Die Erfindung betrifft ein Steuersystem für eine Doppelkupplung eines lastschaltbaren Kraftfahrzeuggetriebes nach dem Oberbegriff des Anspruchs 1.

Ein derartiges Kraftfahrzeuggetriebe ist in VDI-Berichte, Nr. 466, 1983, Seite 101 bis 108, beschrieben. Der Antrieb zum Getriebe ist in zwei koaxiale Wellen aufgeteilt, wobei jede Welle mit einer Kupplung verbunden ist. Die Gänge G1, G3, G5 sind der einen Welle, die G2, G4, R der anderen Welle bzw. Kupplung zugeordnet. Durch Betätigen der entsprechenden Kupplung kann jeweils von einem Gang der einen Welle ohne Zugkraftunterbrechung auf einen Gang der anderen Welle geschaltet werden. Hierzu sind die Kupplungen hydraulisch über eine Stellvorrichtung mit Druck beaufschlagt. Die Stellvorrichtung wird von einem elektro-hydraulischen Steuergerät, in dem ein bestimmtes Steuerprogramm gespeichert ist, und das auf Signale eines Gangwählhebels anspricht, gesteuert. Diese auf Normalbetrieb des Kraftfahrzeuges ausgelegte Schaltautomatik arbeitet in besonderen Fahrsituationen, wie sie beispielsweise beim Anfahren des Kraftfahrzeuges auftreten können, unbefriedigend. Aus DE-A-1 775 135 ist es bekannt, bei einem mechanisch mittels einer Kulissenscheibe gesteuerten, hydraulisch geschalteten Kraftfahrzeuggetriebe in eine Hydraulikleitung ein Kurzschlussventil einzusetzen, das mit einem Fusspedal betätigt wird, um eine Druckregelung zum Anfahren und Rückwärtsfahren des Kraftfahrzeugs zu ermöglichen.

Es ist die Aufgabe der Erfindung, ein gattungsgemässes Kraftfahrzeuggetriebe mit elektronischer Anfahrsteuerung an extreme Fahrbedingungen anpassbar zu gestalten.

Zur Lösung dieser Aufgabe dienen die kennzeichnenden Merkmale des Anspruchs 1.

Da die elektro-hydraulische Steuervorrichtung, auf die bei normalem Fahrbetrieb nur das elektronische Steuergerät einwirkt, zusätzlich durch ein willkürlich betätigbares Kupplungspedal beeinflussbar ist, kann das Schalten der Kupplung entsprechend der jeweiligen Fahrsituation so erfolgen, dass z.B. die Schaltzeit etwas verlängert oder verkürzt wird oder dass die Kupplungen über längere Zeit schleifen und dabei nur einen Teil des Motordrehmoments übertragen.

Die Steuervorrichtung setzt sich nach den Ansprüchen 2 und 3 zusammen aus einem mit dem Kupplungspedal verbundenen Geberzylinder und einem über eine Hydraulikleitung an ihm angeschlossenen Nehmerzylinder sowie einem elektro-hydraulischen Druckregler mit einem Regelschieber, der einen Kupplungsdruckkanal, einen Rücklaufkanal zum Hydraulik-Vorratsbehälter und einen Vorsteuerdruckkanal steuert. Der bei Druckbeaufschlagung längsverschiebliche Kolben des Nehmerzylinders greift über ein Federsystem und einen Stössel an der einen Seite des Regelschiebers an, während auf die andere Seite des Regelschiebers über einen Vorsteuer-Druckregler die vom Steuergerät bestimmte Ansteuerkraft wirkt.

Auf diese Weise lässt sich der Druck auf die Kupplung in Abhängigkeit von der Stellung des Kupplungspedals feinfühlig einstellen und das an den Kupplungen übertragene Moment den jeweiligen Verkehrsbedingungen anpassen. Bei der Betätigung der Kupplung vor dem Anfahren wird der am Druckregler über den Vorsteuer-Druckregler angelegte Vorsteuerdruck erhöht, so dass im Vergleich zur automatischen Anfahrsteuerung ein grösserer Steuerdruck am Druckregler anliegt. Beim schnellen Loslassen des Kupplungspedals bewirkt dieser höhere Druck einen schnellen Kupplungseinrückvorgang.

Ein Ausführungsbeispiel der Erfindung ist in der Zeichnung dargestellt und wird nachfolgend erläutert.

Es zeigen

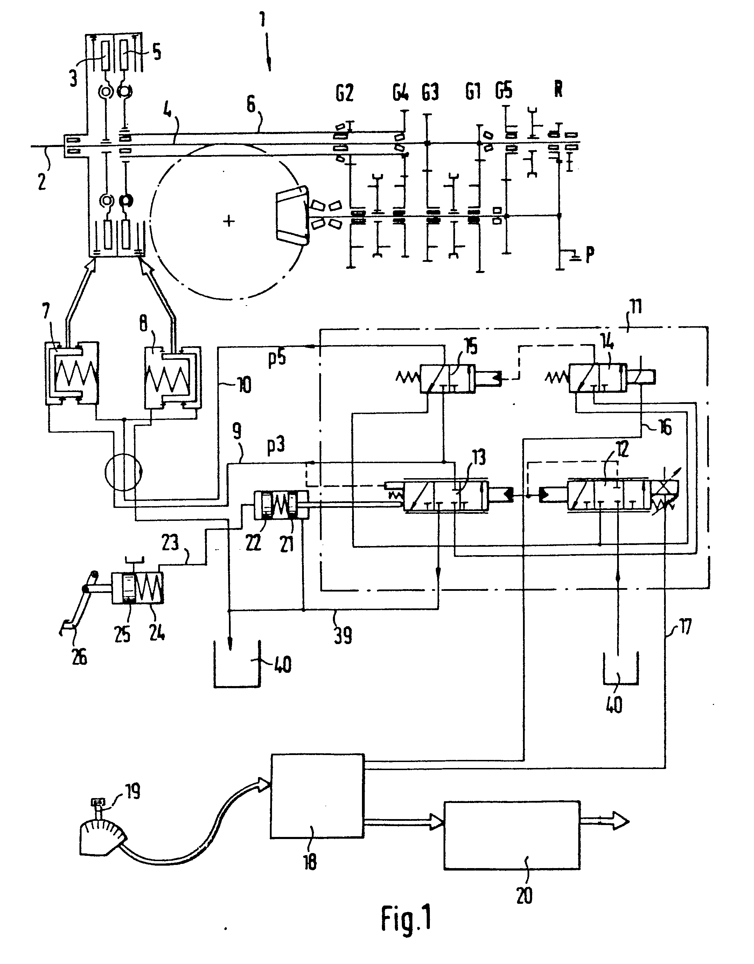

Fig. 1 Schaltschema eines elektro-hydraulischen Steuersystems für ein Doppelkupplungsgetriebe,

Fig. 2 eine elektro-hydraulische Steuervorrichtung.

Ein lastschaltbares Kraftfahrzeuggetriebe 1 ist mittels einer hydraulisch betätigten Doppelkupplung mit der Motorwelle 2 verbindbar. Mit der einen Kupplung 3 sind über eine durchgehende Welle 4 die Vorwärtsgänge G3, G1, G5 und der Rückwärtsgang R, mit der anderen Kupplung 5 über eine Hohlwelle 6 die Vorwärtsgänge G2 und G4 kuppelbar. Die Kupplung 3 wird über einen Hydraulikzylinder 7, die Kupplung 5 über eine Hydraulikzylinder 8 mit Druck beaufschlagt. Beide Hydraulikzylinder 7, 8 sind über getrennte Leitungen 9, 10 an eine elektro-hydraulische Steuervorrichtung 11 angeschlossen, die als Ausgangsgrössen einen Druck P3 für die Kupplung 3 und einen Druck P5 für die Kupplung 5 liefert. Die Steuervorrichtung 11 umfasst einen elektro-hydraulischen Vorsteuerdruckregler 12, einen hydraulischen Druckregler 13 sowie zur Umschaltung auf die Kupplung 5 ein elektro-hydraulisches Umschaltventil 14 und ein hydraulisches 3/2-Umschaltventil 15.

Die Elektromagneten des Vorsteuerdruckreglers 12 und das Umschaltventil 14 sind über elektrische Verbindungsleitungen 16, 17 an ein elektronisches Steuergerät 18 angeschlossen, das mit einem Gangwählhebel 19 in Verbindung steht und in Abhängigkeit von der Stellung des Gangwählhebels 19 neben der Kupplungssteuerung auch die Gangschaltbetätigung 20 nach einem vorgegebenen Programm steuert.

Der hydraulische Druckregler 13 der Steuervorrichtung 11 hat eine mechanische Verbindung zum Kolben 21 eines Nehmerzylinders 22. Dieser Nehmerzylinder 22 ist über eine Hydraulikleitung 23 mit einem Geberzylinder 24 verbunden, dessen Kolben 25 mit einem Kupplungspedal 26 verschiebbar ist.

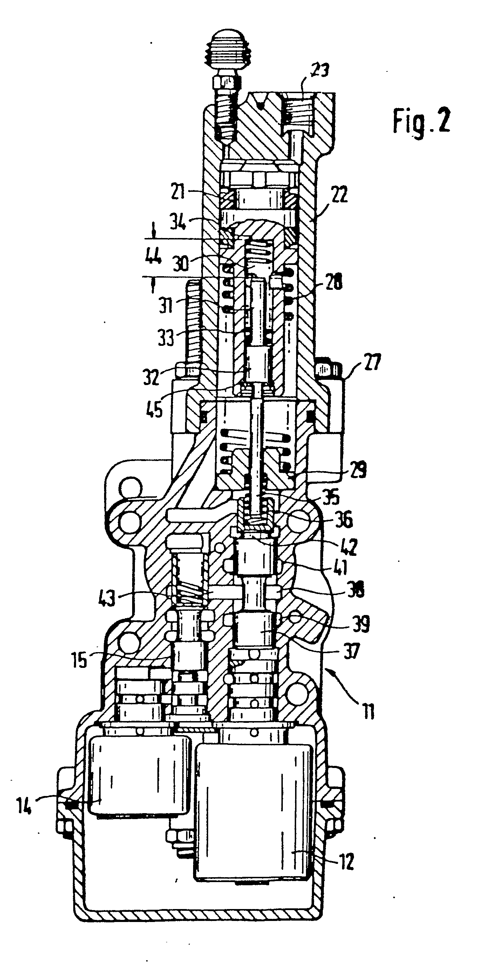

Wie Fig. 2 erkennen lässt, sind im Unterteil eines Gehäuses 27 das 3/2-Umschaltventil 15, parallel dazu der Vorsteuerdruckregler 12 sowie der Druckregler 13 untergebracht. Das Oberteil des Gehäuses 27 ist als Nehmerzylinder 22 ausgebildet, in dem der Kolben 21 längsbeweglich geführt ist. Der Längsverschiebung des Kolbens 21 wirkt eine Rückstellfeder 28 entgegen, die sich an einem im Gehäuse 27 anliegenden Anschlagring 29 abstützt. In eine zentrische Bohrung 30 des Kolbens 21 ragt das eine Ende 31 eines Stössels 32 hinein, über das eine Regelfeder 33 gesteckt ist, die sich am Grunde der Bohrung am Boden 34 des Kolbens 21 abstützt. Auf dem anderen Ende 35 des Stössels, das den Anschlagring 29 durchragt, ist eine Druckfeder 36 zentriert, die zwischen dem Anschlagring 29 und einem Regelschieber 37 verspannt ist, wobei das Stösselende 35 einen geringen axialen Abstand zum Regelschieber 37 aufweist. Der Regelschieber 37 steuert einen Kupplungsdruckkanal 38, an den die Leitung 9 für den Kupplungsdruck P3 und über das Umschaltventil 15 auch die Leitung 10 für den Kupplungsdruck P5 angeschlossen ist. Der Regelschieber 37 steuert weiterhin einen Rücklaufkanal 39 zum Vorratsbehälter 40 für Hydraulikflüssigkeit und einen Druckzuführkanal 41. An dem Regelschieber 37 ist eine Wiegefläche 42 ausgebildet, die über einen Druckrückführkanal 43 mit dem Kupplungsdruckkanal 38 verbunden ist.

Beim normalen Fahrbetrieb wird das Kupplungspedal 26 nicht betätigt. Die Kupplungen und Gänge werden nach Vorgabe des Gangwählhebels 19 selbsttätig geschaltet. Beim Anfahren dagegen ist es zweckmässig, dem Fahrer die Möglichkeit zu geben, das Schalten der Kupplung manuell der jeweiligen Verkehrs- bzw. Strassensituation anpassen zu können. Hierzu tritt er bei Beginn des Anfahrvorgangs das Kupplungspedal 26 voll durch, so dass der Kolben 25 des Geberzylinders 24 und über die Hydraulikleitung 23 auch der Kolben 21 des Nehmerzylinders sowie der Stössel 32 soweit verschoben werden, bis der Regelschieber 37 die Verbindung vom Kupplungsdruckkanal 38 zum Rücklaufkanal 39 freigibt. Da somit der Kupplungsdruck abgebaut ist, ist die Kupplung 3 geöffnet und der zum Anfahren zu benutzende erste Gang G1 oder auch der Rückwärtsgang R von der Motorwelle 2 abgekuppelt.

Durch langsames zurücknehmen des Kupplungspedals 26 erfolgt eine Rückwärtsbewegung der Kolben 25, 21 des Geberzylinders 24 und Nehmerzylinders 22 und somit eine Entlastung der Regelfeder 33, so dass der Regelschieber 37 durch den vom Vorsteuerdruckregler 12 auf ihn wirkenden Ansteuerdruck zurückgeschoben werden kann. Am Ende dieses Bewegungsablaufs steht der Kupplungsdruckkanal 38 mit dem Druckzuführkanal 41 in Verbindung. Dadurch steigt der Druck im Kupplungsdruckkanal 38 soweit an, bis die Rückstellkraft resultierend aus der Kraft an der Wiegefläche 42 und der Kraft der Regelfeder 33 im Gleichgewicht steht mit der durch den Ansteuerdruck bewirkten Ansteuerkraft. Der Regelschieber 37 nimmt eine Zwischenstellung ein; er verschliesst den Druckzuführkanal 41 und den Rücklaufkanal 39. Die Kupplung 3 wird mit dem so eingeregelten Kupplungsdruck beaufschlagt, wodurch sich das gewünschte, an ihr übertragene Anfahrdrehmoment einstellt. Dieser Regelvorgang wiederholt sich bei weiterer Rücknahme des Kupplungspedals 26 solange, bis bei Beendigung des Anfahrvorganges durch die Rückstellfeder 28 der Kolben in die Ausgangsstellung zurückgestellt wird und der Regelschieber 37 nur noch unter der Wirkung der vom Steuergerät 18 festgelegten und über den Vorsteuerdruckregler 12 aufgebrachten Ansteuerkraft und der Wiegeflächenkraft steht.

Der Abstand 44 zwischen dem Stösselende 31 und dem Boden 34 des Kolbens 21 ist so gross gewählt, dass einerseits die Regelfunktion beim Anfahren des Kraftfahrzeugs gewährleistet ist, andererseits bei defekter Regelfunktion, sei es durch Bruch der Regelfeder 33 oder Klemmen des Regelschiebers 37 eine mechanische Mitnahme des Regelschiebers durch den Kolben 21 soweit erfolgt, bis der Kupplungsdruckkanal 38 mit dem Rücklaufkanal 39 verbunden und somit die Kupplung 3 geöffnet ist.

Um nach Beendigen des Anfahrvorgangs die selbsttätige elektro-hydraulische Regelung bzw. Kupplungssteuerung nicht zu behindern, ist der Stössel 32 durch eine Mitnahmescheibe 45 mit dem Kolben 21 verbunden und geht mit ihm in die Ausgangslage zurück, so dass er auf den Regelschieber 37 keinen Einfluss mehr hat.

**Patentansprüche**

1. Steuersystem für eine Doppelkupplung (3, 5) eines lastschaltbaren Kraftfahrzeug-Gangschaltgetriebes (1), bei dem jeweils einer Kupplung mehrere Getriebegänge zugeordnet und über sie mit der Motorwelle (2) verbindbar sind, wobei die Kupplungen (3, 5) von einer elektro-hydraulischen Steuervorrichtung (11) betätigt sind, die einen den Kupplungsdruck festlegenden hydraulischen Druckregler (13) enthält, und die Steuervorrichtung (11) an ein auf Signale eines Gangwählhebels (19) ansprechendes Steuergerät angeschlossen und eine automatische Anfahrsteuerung für die Anfahrkupplung (3) vorgesehen ist, dadurch gekennzeichnet, dass ein Regelschieber (37) des hydraulischen Druckreglers (13) von der einen Seite her über einen Vorsteuer-Druckregler (12) mit einem vom Steuergerät (18) bestimmten Druck, von der anderen Seite her über mechanische und hydraulische Zwischenglieder von einem manuell mit einem Kupplungspedal (26) an einem Geber-Zylinder (24) einstellbaren Druck beaufschlagt ist.

2. Steuersystem nach Anspruch 1, dadurch gekennzeichnet, dass die gesamte Steuervorrichtung aus einem mit dem Kupplungspedal (26) verbundenen Geberzylinder (24), einem Nehmerzylinder (22) sowie einer zugehörigen Hydraulikleitung (23) und dem vom elektronischen Steuergerät (18) beeinflussten elektro-hydraulischen Vorsteuer-Druckregler (12) und einem hydraulischen Druckregler (13) besteht, dessen Regelschieber (37) einen Kupplungsdruckkanal (38), einen Rücklaufkanal (39) zum Vorratsbehälter (40) und einen Druckzuführkanal (41) steuert.

3. Steuersystem nach Anspruch 2, dadurch gekennzeichnet, dass ein längsverschieblicher Kolben (21) des Nehmerzylinders (22) über ein Federsystem (28, 33, 36) und einen Stössel (32) an der einen Seite des Regelschiebers (37) des hydraulischen Druckreglers (13) angreift, während auf die andere Seite des Regelschiebers (37) über den Vorsteuer-Druckregler (12) der vom elektronischen Steuergerät (18) bestimmte Ansteuerdruck einwirkt.

4. Steuersystem nach Anspruch 3, dadurch gekennzeichnet, dass der Nehmerzylinder (22) samt Federsystem (28, 33, 36) und Stössel (32) sowie der hydraulische Druckregler (13), der Vorsteuer-Druckregler (12) und ein 3/2-Umschaltventil (15) in einem gemeinsamen Gehäuse (27) untergebracht sind.

5. Steuersystem nach Anspruch 3 und 4, dadurch gekennzeichnet, dass das Federsystem (28, 33, 36) gebildet ist aus einer äusseren Rückstellfeder (28), mit der sich der Kolben (21) an einem am Gehäuse (27) anliegenden Anschlagring (29) abstützt, aus einer hierzu konzentrischen, inneren Regelfeder (33), die in einer zentrischen Bohrung (30) des Kolbens (21) an dessen Boden (34) anliegt und sich am anderen Ende an dem in die Bohrung (30) hineinragenden, einen Stösselende (31) abstützt sowie aus einer Druckfeder (36), die an dem den Anschlagring (29) durchgreifenden anderen Stösselende (35) angeordnet ist und sich einerseits am Anschlagring (29) und andererseits am Regelschieber (37) abstützt.

6. Steuersystem nach den Ansprüchen 2, 3 und 5, dadurch gekennzeichnet, dass die Regelfeder (33) so bemessen ist, dass ihre Federkraft in der Endverschiebelage des Kolbens (21) höher ist als die Ansteuerkraft, so dass sie über den Stössel (32) den Regelschieber (37) so weit verschiebt, bis der Kupplungsdruckkanal (38) mit dem Rücklaufkanal (39) verbunden ist.

7. Steuersystem nach Anspruch 5, dadurch gekennzeichnet, dass das eine Stösselende (31) zum Boden (34) des Kolbens (21) einen solchen Abstand (44) aufweist, dass die Regelfunktion bei Normalbetrieb gewährleistet ist, bei defekter Regelfunktion eine Mitnahme des Regelschiebers (37) solange erfolgt, bis der Kupplungsdruckkanal (38) mit dem Rücklaufkanal (39) verbunden ist.

## Claims

1. Control system for a twin clutch (3, 5) of a power shift gearbox (1), in which a respective plurality of gear speeds is associated with each clutch and for connection to the engine shaft (2), the clutches (3, 5) being actuated by an electro-hydraulic control device (11), which contains a hydraulic pressure regulator (13) determing the clutch pressure, and the control device (11) is connected to a control unit responding to signals of a gear-selector lever (19) and an automatic starting control for the starting clutch (3) is provided, characterised in that a valve element (37) of the hydraulic pressure regulator (13) is acted upon from one side by way of a pre-control pressure regulator (12) by a pressure determined by the control unit (18), from the other side by way of mechanical and hydraulic intermediate members by a pressure able to be adjusted manually by a clutch pedal (26) at a master cylinder (24).

2. Control system according to Claim 1, characterised in that the entire control device consists of a master cylinder (24) connected to the clutch pedal (26), a slave cylinder (22) with an associated hydraulic line (23) and the electro-hydraulic pre-control pressure regulator (12) influenced by the electronic control unit (18) and a hydraulic pressure regulator (13), whereof the valve element (37) controls a clutch pressure channel (38), a return channel (39) to the supply container (40) and a pressure supply channel (41).

3. Control system according to Claim 2, characterised in that a longitudinally displaceable piston (21) of the slave cylinder (22) acts by way of a spring system (28, 33, 36) and a push rod (32) on one side of the valve element (37) of the hydraulic pressure regulator (13), whereas the control pressure determined by the electronic control unit (18) acts on the other side of the valve element (37) by way of the pre-control pressure regulator (12).

4. Control system according to Claim 3, characterised in that the slave cylinder (22) together with the spring system (28, 33, 36) and push rod (32) as well as the hydraulic pressure regulator (13), the pre-control pressure regulator (12) and a 3/2-way change-over valve (15) are located in a common housing (27).

5. Control system according to Claims 3 and 4, characterised in that the spring system (28, 33, 36) is formed from an outer return spring (28), by which the piston (21) is supported against a stop ring (29) bearing on the housing (27), from an inner regulating spring (33) which is concentric therewith, which spring bears in a central bore (30) of the piston (21) against its base (34) and is supported at the other end on the one end of the push rod (31) projecting into the bore (30) as well as of a compression spring (36), which is located at the other end of the push rod (35) passing through the stop ring (29) and which is supported at one end on the stop ring (29) and at the other end on the valve element (37).

6. Control system according to Claims 2, 3 and 5, characterised in that the regulating spring (33) is dimensioned so that its spring force in the end sliding position of the piston (21) is higher than the control force, so that by way of the push rod (32) it displaces the valve element (37) so far until the clutch pressure channel (38) is connected to the return channel (39).

7. Control system according to Claim 5, characterised in that the one end of the push rod (31) is at such a distance (44) from the base (34) of the piston (21) that the regulating function is guaranteed under normal operation, and in the case of defective regulating function, an entrainment of the valve element (37) occurs until the clutch pressure channel (38) is connected to the return channel (39).

## Revendications

1. Système de commande pour un embrayage double (3, 5) d'une boîte de vitesses et d'inversion (1) d'un véhicule automobile, dans lequel à chaque embrayage correspondent plusieurs rapports de transmission qui peuvent être reliés par lui à l'arbre (2) du moteur, les embrayages (3, 5) étant manœuvrés par un dispositif de commande électro-hydraulique (11) qui comprend un régulateur de pression hydraulique (13) fixant la pression d'embrayage, et le dispositif de commande (11) est relié à un appareil de commande réagissant à des signaux d'un levier de sélection de vitesse (19) et une commande de démarrage automatique pour l'embrayage de démarrage (3) est prévue, caractérisé en ce qu'un tiroir de réglage (37) du régulateur de pression hydraulique (13) peut être soumis d'un côté, par l'intermédiaire d'un régulateur de pression pilote (12), à une pression déterminée par l'appareil de commande (18), et de l'autre côté, par l'intermédiaire d'organes mécaniques et hydrauliques intermédiaires, à une pression pouvant être établie sur un cylindre-transmetteur (24) manuellement au moyen d'une pédale d'embrayage (26).

2. Système de commande selon la revendication 1, caractérisé en ce que l'ensemble du dispositif de commande comprend un cylindre-transmetteur (24) relié à la pédale d'embrayage (26), un cylindre récepteur (22), ainsi qu'une conduite hydraulique correspondante (23) avec le régulateur de pression pilote électro-hydraulique (12) sur lequel agit l'appareil de commande électronique (18), et un régulateur de pression hydraulique (13) dont le tiroir de réglage (37) commande un canal de pression d'embrayage (38), un canal de retour (39) à destination du réservoir (40) et un canal d'amenée de pression (41).

3. Système de commande selon la revendication 2, caractérisé en ce qu'un piston mobile longitudinalement (21) du cylindre récepteur (22) agit par l'intermédiaire d'un système de ressorts (28, 33, 36) et d'un poussoir (32) de l'un des côtés du tiroir de réglage (37) du régulateur de pression hydraulique (13), tandis que la pression d'activation déterminée par l'appareil de commande électronique (18) agit de l'autre côté du tiroir de réglage (37), par l'intermédiaire du régulateur de pression pilote (12).

4. Système de commande selon la revendication 3, caractérisé en ce que le cylindre récepteur (22) avec le système de ressorts (28, 33, 36) et le poussoir (32), ainsi que le régulateur de pression hydraulique (13), le régulateur de pression pilote (12) et une soupape de commutation 3/2 (15) sont logés dans un boîtier commun (27).

5. Système de commande selon les revendications 3 et 4, caractérisé en ce que le système de ressorts (28, 33, 36) est constitué par un ressort de rappel extérieur (28) par lequel le piston (21) s'appuie sur une bague de butée (29) située sur le boîtier (27), un ressort de réglage intérieur (33) qui lui est concentrique et est placé dans un alésage central (30) du piston (21) au contact de son fond (34) et s'appuie, à l'autre extrémité, à l'une des extrémités de poussoir (31) pénétrant dans l'alésage (30), ainsi qu'un ressort de compression (36) qui est placé sur l'autre extrémité de poussoir (35) traversant la bague de butée (29) et s'appuie d'une part sur la bague de butée (29) et, de l'autre sur le tiroir de réglage (37).

6. Système de commande selon les revendications 2, 3 et 5, caractérisé en ce que le ressort de réglage (33) est dimensionné de façon que sa force élastique soit supérieure à la force d'activation dans la position de déplacement extrême du piston (21), de sorte qu'il déplace le tiroir de réglage (37), par l'intermédiaire du poussoir (32), jusqu'à ce que le canal de pression d'embrayage (38) soit relié au canal de retour (39).

7. Système de commande selon la revendication 5, caractérisé en ce que l'une des extrémités de poussoir (31) présente, par rapport au fond (34) du piston (21), une distance (44) telle que la fonction de réglage est garantie au cours d'un fonctionnement normal, tandis que, lorsque la fonction de réglage est défectueuse, un entraînement du tiroir de réglage (37) a lieu jusqu'à ce que le canal de pression d'embrayage (38) soit relié au canal de retour (39).

Fig.1

Fig.2